# EUROPEAN PATENT APPLICATION

(11) **EP 2 196 782 A1**
(43) Date of publication of application: **16.06.2010**
(21) Application number: 09178035.3
(22) Date of filing: 04.12.2009
(51) Int. Cl.: G01G 13/02, G01G 13/16, G01G 19/32, B01F 15/02, B29C 47/10, B65G 53/04

(54) **Transport system of granular material**

(30) Priority: 05.12.2008 IT PD20080364
(71) Applicant: Piovan S.P.A., 30036 Santa Maria di Sala (VE) (IT)
(72) Inventor: Gesuita, Enzo, 35030, Selvazzano Dentro (PD) (IT); Ronzone, Riccardo, 30173, Mestre (VE) (IT)
(74) Representative: Cicconetti, Andrea

(57) **Abstract**

A transport system of granular material comprises a plurality of containers (2) and a control system (200) that includes:
- a plurality of local control units (5) associated to respective containers (2);
- a central control unit (6) exchanging information and issuing commands to said local control units (5), wherein such information comprise control information, operating information, including instructions which cause said local control units to answer by providing information in return and/or by starting one or more procedures at local level;
- a communication network (13) connecting said central control unit (6) and said local control units (5); the transport system further comprises weighing means (8) that is associated to each container (2) for measuring a weight of granular material contained thereinto and is connected to the respective local control unit (5) and/or said central control unit (6) for sending information about said weight to said local control unit (5) and/or said central control unit (6), wherein said local control unit (5) and/or said central control unit (6) on the basis of said weight controls a quantity of said granular material inside said container (2) by starting a filling cycle for increasing said quantity by an amount determined by suitable control algorithms. (Figure 1)

## Description

The present invention relates to pneumatic transport systems of granular material. More particularly, the present invention relates to a transport system of granular material that operates under positive or negative pressures, which cause the granular material to be transferred from one or more central storage points to one or more local storage points situated in different locations, or to one or more points of use such as dehumidification hoppers, mixing systems, processing machines, or other equipments.

A pneumatic transport system of granular material essentially includes a unit that generates a positive or negative air flow along one or more pipes connecting one or more granule storage points, sometimes identified as sources, to one or more destination points or local storage points, sometimes identified as containers. A number of other devices or units may also be included within the transport system, for example, sorting and selection systems, valves for duct cleaning, mixing valves, etc.

Throughout the present description and in the claims, reference will be made to "granular material" or "granules" such terms including also materials having structures similar to granules, such as for example, chips, re-milled materials or powdery materials.

The air flow, whether with positive or negative pressure, moves the granules from the sources to the containers, where the material becomes available for transport to points of use situated downstream, for example another storage unit, a dehumidification hopper, a mixing unit, a processing machine or other types of equipment. An intermediate buffer hopper collecting of the granular material may be provided between the containers and the final point of use, allowing the downstream point of use to be supplied with a desired amount of material for a predetermined period of time even when the upstream container is empty or is undergoing a filling cycle. The control of the entire system is typically entrusted to a centralized logic control unit, which exchanges information with peripheral units, such as containers, pressure/vacuum units, etc., through a serial or similar connection. The serial connection line must be installed throughout the transport system in order to link all components thereof.

The prior art generally teaches two alternative system for starting up and performing a container filling cycle.

The first system of prior art may be defined as a "time-limited filling system" in which the container filling cycle is triggered by a sensor that signals that the container is empty or that a material inside a hopper located below the container has fallen below a predetermined level.

The filling cycle duration is typically set by trial and error by an operator that uses a switchboard and that attempts to achieve an optimum filling cycle, such to avoid an excessively long loading cycle and a clogging of the ducts conveying the granules.

Therefore, the evaluation of the duration of the filling process is inherently limited by its essentially manual nature and a series of empirical tests must be performed before a fine tuning of the process may be achieved, with the consequent waste of time and granular material.

Furthermore, the operative parameters of this system are not necessarily constant over time, both because of structural aging of the system (particularly due to clogging of the filters of the transport unit or of a filter separating the air from the granules inside the container) and because of possible variations in granule flowability caused, for example, by different lots of granular material or variations in environmental conditions.

Still further, transport time must be adjusted manually for each change in the type of transported material or when a partial filling is desired, that is, when the containers are not to be filled completely. This may occur, for example, when the amount of material requested downstream of the container is decreased, or when the same container must feed at the same time two users having different processing capacities. If load exceeds consumption, the material may be retained in the container/buffer hopper system, and if the granule had been previously dehumidified or simply heated, too much humidity may be absorbed or an excessive cool down may occur.

In the second system of prior art, a start-up of the filling cycle is performed similarly to the first system, but the filling cycle is terminated when the granules inside the container reach a predetermined level, which may be detected by a sensor.

This second system offers the advantages of eliminating or reducing the time and granular material required for setting up the system and of reducing dependence from the level of maintenance of the system, but does not solve the inability of the system to change the amount of fill material without resetting the system, because the sensors are typically placed in fixed positions or can only detect a predetermined level of material that has been set manually by the operator. Another drawback of known systems is the low reliability of the level sensors and the high costs of sensors, especially for heated granules. Sensitivity of the sensors also tends to be highly affected by the type and color of the granule to be detected, and reference values of these sensors often change over time, requiring periodic re-settings.

The logic control of the transport system is generally based on one of two architectures.

A first method of control is sometimes referred to as "centralized logic method." In this architecture, the central processing unit generally collects all information coming from the peripheral units, processes such information, and finally provides commands to all system units/components. As a result, the system units/components behave as "slaves", that is, they are typically configured only to send information to the central processing unit and to receive commands from it.

A second architecture is sometimes referred to as "distributed logic method." In this architecture, the central processing unit still collects information, processes it and provides commands to all system units/components. The system units/components, however, can execute certain local functions without being managed by the central processing unit, for example, can interrupt a filling cycle when the local sensor detects that the material has already reached a predetermined level or when the time elapsed for the filling cycle exceeds a predetermined value.

In both cases, every system units/components connected to the serial communication network requires a unique physical address, which is set up manually by the operator during installation, for example, using dip-switches.

A limitation common to all the transport systems in the prior art is the complexity of the required wired or cabled network. In fact, in both the centralized logic and distributed logic solutions, installation of the required communication cabled network causes significant hardware and labor costs.

Further, installation time, allocation of addresses and debugging of the system, as well as the time needed to fix possible connection and/or addressing errors cause additional costs that affect the profitability of the system.

Still further, wiring and installation require spaces that significantly affect machine layout and the position of the granule containers feeding downstream machines.

In general, a pneumatic transport system of granular materials may extend across large areas as is typical in industrial installations. Operators may need to know the status or modify the settings of a particular granule container. This is achieved by connecting an interface or control device, such as a portable device, directly to the local control unit of granule container or to a user interface of central control unit. In both situations, this operation can be unfavorable because, in the first case, the operator must access the granule container physically, sometimes in an elevated position, for the wired connection of the portable device to local control unit to take place, while, in the second case, the operator must physically access remote central control unit.

A serious problem that frequently affects the known transport system consists in electrostatic charges that are generated by the granular material, typically plastics material, which rubs the walls of the transport conduits when conveyed.

A known transport system comprises a plurality of containers which are connected each to other by a communication network of which local control units of said containers - and of the other system components - constitute the nodes. Connecting a system of containers with a wired network (made of conducting material, e.g. copper) has the drawback of making equipotential a system of charged bodies (containers) which are not equipotential by their own nature/use (since the containers are electrostatically charged by the plastic granules).

Earthing point to point the whole system serves little purpose since the electrostatic charges accumulated by rubbing on the insulating materials (plastic granules) cannot be earthed by a conductor (namely an earth conductor) as the plastic granule is not a conductor of electricity. Thus this electrostatic charge is "frozen" on the granule, which remains charged once it has been charged.

The galvanic connection of a set of containers electrostatically charged by an electric communication network is an intrinsic source of hazardous malfunctions due to the high potential differences that occur between the various nodes (up to dozens of kV).

Such potential differences can destroy the electric communication interfaces of local control units and make it necessary to adopt very expensive electric interface methods based on galvanic decoupling systems such as, for example, photocouplers, transformers and the like. This is required to ensure reliable communication even in the presence of high potential differences between the containers.

In the known transport system of granular material there is provided a serial communication network which "touches" all the nodes - namely the containers and the other system components - of the network in a unique sequence. This architecture is defined as of "daisy chain" type.

According to this network architecture, information or data transmitted by the central control unit and directed to a local control unit of the serial network has to traverse (and thus be received and/or processed) by at least all the preceding local control units.

The "daisy chain" architecture is widely used in the transport systems for granular materials, since it is quite simple in terms of hardware and cabling and thus economic.

Furthermore, since the data flow between control unit and containers/components is not particularly high in terms of data exchanged vs. time, the use of more sophisticated wired communication systems, such as, for example, star networks or communication networks that are similar in functionality, such as the known Ethernet networks, is not justified.

A drawback of the "daisy chain" network consists in that the failure of one node (a local control unit) may affect the connection with the nodes downstream of the faulty node. In fact, the downstream nodes can be reached by information or data only if said information is able to travel through the faulty node, which is an event that does not always occur in practice.

Usually the failure of a generic node causes the loss of control of all or part of the communication network with obvious disadvantages. If the faulty node is the master node, the entire communication network is blocked.

An object of the invention is to improve the pneumatic transport systems of granular material, particularly the transport systems comprising a plurality of containers or locale storage points for the granular material.

A further object is to provide a transport system of granular material which minimizes, or eliminates, manual operations involved in setting up and configuring the transport system before start-up and also manual procedures required modifying operating parameters according to local conditions or according to the type of transported granular material.

Another object is to provide a transport system wherein the quantity of granular materials inside each container can be set and adjusted very precisely and controlled with high reliability over the entire transport system operation.

Still another object is to provide a transport system which is reliable and economic and does not require delicate and high costly sensors.

According to the invention, a transport system of granular materials is provided according to claim 1.

The high degree of automation of transport system of the invention is achieved by continuously monitoring the weight of a container during the filling cycle, such to determine when the filling must start and when it must be interrupted once a pre-established amount has been reached. More particularly, the transport system provides for monitoring a container through a series of statistical parameters related to effective filling time, weight of the transported granular material and, consequently, flow rate of the incoming material. In the event that a filling cycle in progress has one or more parameters, time and/or others, that fall outside of the values contained in saved historical data, the system can warn a supervision system, a centralized control system, and/or an operator connected to a communication network through portable terminals. If, for example, the time required for the filling cycle and measured by timers is significantly longer than a statistical value processed by the system, an alarm can be generated to warn of possible problems along a transport duct or of lack of material in one of the sources.

In addition, the transport system is self-teaching with regard to the consumption of material per unit of time, or the flow rate of the outgoing material released by each granule container.

Measurements can be executed locally with weighing means connected to each container, or remotely with the centralized control unit and/or with a supervision system, which can obtain data regarding weights at pre-established intervals for container interconnected within the network. In the event that a simultaneous filling of two or more containers is required, instead of following, for example, a FIFO-type logic (First In First Out) to manage the first emptied container, filling priority may be given to the container with a higher historical flow rate. This configuration makes it possible to determine whether a request for material from a user (the material outflow rate) is slowing down and thus to intervene by reducing container load amounts, so as to maintain a proper temperature and degree of humidity in the granules.

Likewise, filling amounts may be managed if, by collecting data about the state of the granular material (such as temperature and humidity) through suitable sensors properly installed in the container, a possible degradation of physical state of the material (such as excessive cooling, humidity absorption, etc.) is detected.

By using the transport system of the invention, material consumption may be determined with precision, allowing the storage of work data, the forecasting of consumption and the installation of alarms to monitor the material remaining in the sources, for example when the source is an external silo, the refilling of which requires reserving a tank truck well in advance.

The amount of the transported material may be managed by equipping the containers with weighing instruments, and additionally with a set of sensors to detect or measure humidity, temperature or other parameters. All these instruments provide the management system with sufficient information to generate system archives, alarms, forecasts and information on the state of the system.

The invention can be better understood and carried into effect with reference to the enclosed drawings that show an embodiment of the invention by way of non-limitative example, in which:
Figure 1 is a schematic view of the transport system of granular material of the invention;
Figure 2 is a schematic view showing a communication network between units and components of the transport system of Figure 1;
Figure 3a is a schematic view of a container of the transport system of Figure 1 in an empty state at the beginning of a filling cycle;
Figure 3b is a schematic view of the container of Figure 3a in a loaded state at the end of the filling cycle;
Figures 4a and 4b are views of a further version of the container of Figures 3a and 3b, in which the filling cycle start-up is initiated by a traditional level sensor located respectively in the container or in a hopper underneath;
Figures 5a to 5c are schematic views showing some possible node connection topologies of the communication network of the transport system of Figure 1.

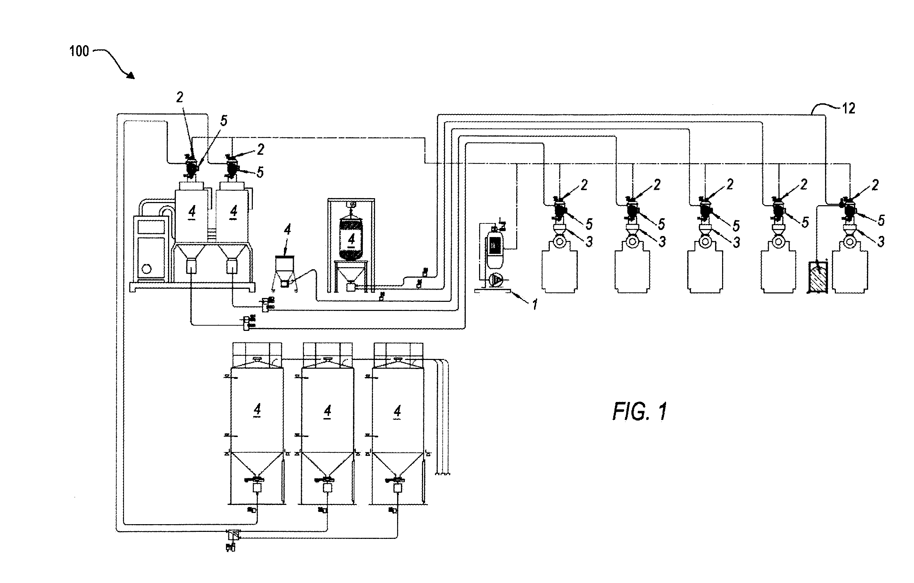

With reference to Figure 1, numeral 100 indicates a pneumatic transport system for granular material comprising a plurality of containers 2, or local storage points for the granular material, each of which being mounted above a respective buffer hopper 3 that is installed upstream of a processing machine, not shown in the figures.

The transport system 100 operates, for example, with negative pressure and thus includes a vacuum generating unit 1 that is connected to the plurality of containers 2.

Alternatively, the transport system 100 may operates with a positive pressure or with more complex systems that may include multiple vacuum/pressure generating units and sorting/selection systems.

Transport ducts 12 are provided for transporting the granular material from remote storage points or source 4 to the containers 2.

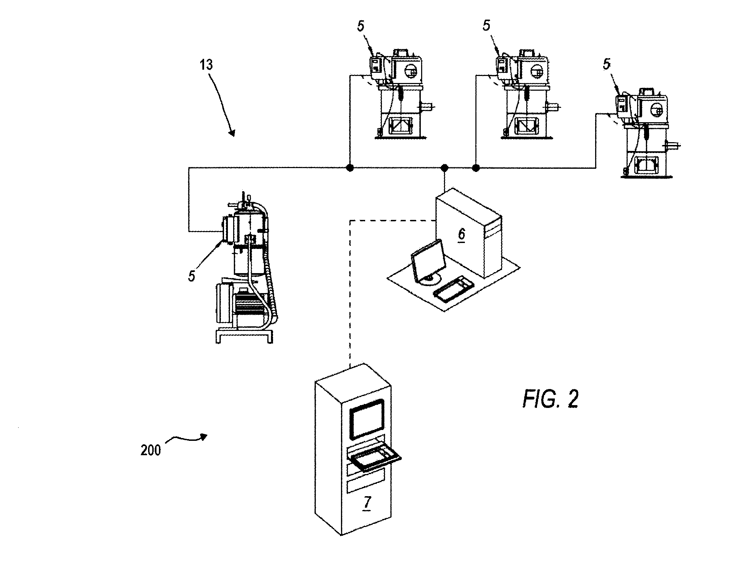

Each container 2 comprises in its bottom portion a discharge flap 11 which can be actuated in an open position so as to discharge the granular material in the buffer hopper 3 below. The transport system 100 comprises a central control unit or central processing unit (CPU) 6 that is connected to peripheral units or local control units 5 of said containers and/or of other transport system components (Figure 2).

The central unit 6 can be also connected to a supervision or business management system 7 through a suitable communication network.

The central control unit 6 and the local control units 5 define a control system 200 of transport system.

Such control system 200 can be, for example, a "distributed logic" control system wherein the central control unit 6 is configured to collect information and to coordinate, process and transmit operating commands to the local control units 5 and wherein the local control units 5 are configured to provide information to said central control unit 6, to execute commands received from central control unit 6 and to independently undertake procedures and actions at the local level.

In a version of the transport system 100 not shown in the figures, the control system is a "completely centralized logic" control system.

Hybrid solutions are also possible, in which control is centralized for certain aspects, governed mostly by the central control unit, and decentralized for other aspects, in which a part of the control is delegated to local control units 5.

Weighing means 8 is provided that is associated to each container 2 for measuring and monitoring the weight of container 2 during the whole operation of transport system 100, performing a real time task. Since the weight of container 2 (tare weight) is constant and known, weighing means 8 provides continuous measuring and monitoring of granular material inside the container 2.

Weighing means 8 further detects a fill/empty status of the respective container 2.

Weighing means 8 comprises a weighting unit or instrument mounted under the respective container 2 and connected to the local control unit 5 of the container 2.

In other embodiments, not shown in the figures, the weighing instrument 8 may be placed in different positions with regard to container 2.

The weighing instrument 8 can be also integrated with the local control unit 5 of the container 2 and may include one or more suitable weighting sensor, for example, a load cell connected to local control unit 5.

Weight measurement may be performed either locally for each container 2, i.e. through a control card which is coupled to the local control unit 5 and connected to one or more weighing sensors, or remotely through the central control unit 6, which is configured to acquire weight data at predetermined time intervals by interrogating all the local control units 5.

Thus, by continuously monitoring the weight of each container it is possible to calculate the granular material weight inside the containers 2, and, consequently, to evaluate the amount of granular material that has been transported in the whole transport system 100.

Each granule container 2, or the respective buffer hopper 3, may additionally be equipped with a sensors 9 for detecting or measuring temperature, humidity or other parameters, as described in greater detail below.

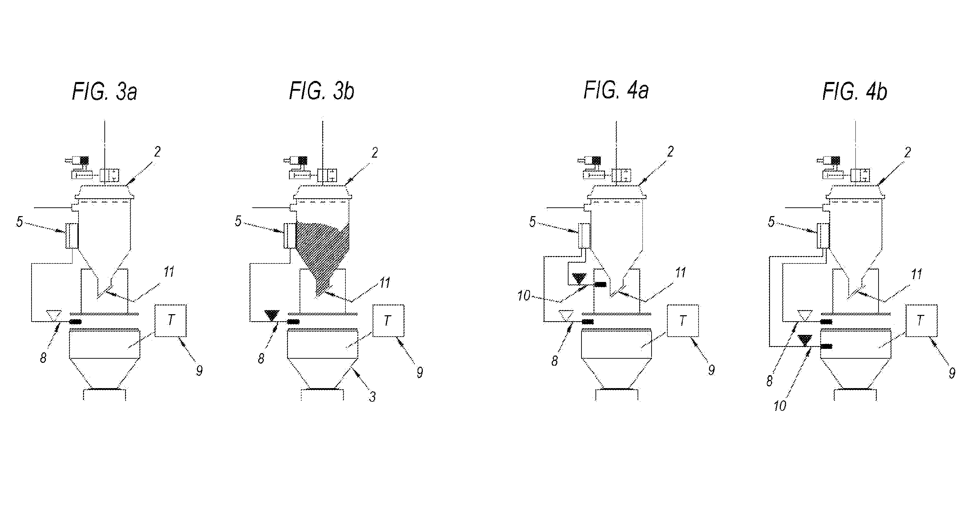

In a version of the transport system 100 of the invention, level sensors 10 are provided that are capable to detect at least the absence of granular material inside the containers 2 (Figure 4a) or in the respective buffer hoppers 3 (Figure 4b).

Real time information regarding the weight of granular material inside containers 2 - and other additional parameters as well - may be processed by the control system 200 in the local control units 5 or in the central control unit 6, firstly to determine when a container 2 is empty (Figure 3a) and thus needs to be refilled (Figure 3b) starting a filling cycle. In a version of the transport system, each local control unit 5 transmits information to the central control unit 6 about the fill/empty status of the respective and/or other container 2 and causes the central control unit 6 to start or stop the filling cycle of the respective and/or of other container 2.

Alternatively, the filling cycle start-up is triggered by a level sensor 10 signaling that granular material is absent in container 2 or in buffer hopper 3.

Control system 200 comprises timer means for measuring duration of the filling cycle of each container 2.

Once the filling cycle of container 2 has begun, weight information is provided in real time and is used to determine the duration of filling cycle, namely the moment when the filling cycle must be interrupted because a predetermined weight has been reached.

In a first method of determining duration of filling cycle, the filling is "time-limited" but, differently from the prior art, filling duration is not set manually by an operator but is calculated by the control system on the basis of a statistical processing of data regarding weights of granular material introduced in the containers during the previous filling cycles and durations of said previous filling cycles. In a second method of determining duration of filling cycle, the filling is interrupted as soon as the weight of the granular material inside the container 2 reaches a predetermined filling amount (Figure 3b).

Statistical processing of historical data concerning the weights of granular material introduced in the container 2 in each respective filling cycle and the time required to complete such filling cycles is used by the control system, in the local control unit 5 and/or in the central control unit 6, to calculate an average duration time for completing the filling cycle - namely a time limit within which the filling cycle must be completed - and an average inflow/outflow rate of the granular material flowing into/from the container 2.

In the event, for example, that the filling cycle in progress lasts longer that the statistically processed average time limit, and by a percentage larger than a predetermined tolerance value, an alarm alerts of possible problems in transport ducts 12, of an irregular filling due to a defective closure of discharge flap 11, and/or of lack of material in one of the sources 4.

If the container 2 is not filled with the predetermined filling amount within the average or predetermined time limit, the respective local control unit 5 can independently decide to extend the filling duration to add the missing amount of granular material. This extension of the filling duration, identified also herein as extra time, is a supplemental period of time added to the predetermined time.

Statistical processing of historical data concerning the weights of granular material introduced in the container 2 in each respective filling cycle, the time necessary to complete the filling cycle and the interval of time between two successive filling cycles can be used by the control system, in the local control unit 5 and/or in the central control unit 6, to estimate with sufficient precision the consumption of granular material per unit of time or the outflow rate of granular material from each granule container 2.

In the event that the simultaneous filling of two or more containers 2 is required, instead of following a FIFO-type logic (First In First Out) to manage the first emptied container, filling priority may be given to the container with a statistically higher outflow rate.

Moreover, the control system 200 is configured to notice whether a demand of granular material from a point of use (i.e. a processing machine) is slowing down, by detecting, for example, that the time elapsed between two successive filling cycles is increasing with respect to the values between preceding filling cycles. In this way the control system may decrease a weight limit set point so as to reduce the filling amount, in order to preserve correct temperature and dew point values of granular material in the point of use.

The control system 200 may also intervene on the predetermined filling amount of the filling cycle in order to reduce a retention time of the granular material inside the container if, by collecting data concerning the granular material physical state, e.g. temperature and humidity measured by further sensors 9, a degradation of physical state of the granular material such as excessive cooling, humidity absorption, etc, is detected.

The control system 200 may also intervene for stopping the filling cycle when the granular material inside the container 2 reaches an arbitrary weight, which can be set for each container 2 by the operator. Said arbitrary weight can range up to a maximum accepted weight, that is typically the predetermined filling amount.

By statistically processing data and information concerning the weights of granular material introduced in the container 2 in each respective filling cycle and the interval of time between two or more successive filling cycles it is possible to precisely calculate granular material consumption through the transport system over the time (average consumption), to create historical work archives, to generate consumption forecasts, and to provide alarms for restoring material in the initial sources.

As shown in Figure 2, the aforesaid data and information are provided by central control unit 6 to the business management system 7 that will use data and information as planned by the user. For example, purchase orders for re-stocking consumed material may be automatically issued, especially when the source 4 is an external silo, the filling of which requires reserving a tank truck well in advance.

The transport system 100 of the invention thanks to the weighting means 8 allows minimizing or eliminating manual operations for setting up and configuring the transport system before start-up and also manual procedures required to modify operating parameters according to local conditions or according to the type of transported granular material.

In fact, weighting means 8, which continuously measures weight of each container 2, makes possible for the control system 200 to calculate in real time the amount of granular material inside the container irrespective to local condition or type of material.

Furthermore, the control system 200, which receives data concerning the granular material physical state (e.g. temperature, humidity, etc.) by further sensors 9, can change the predetermined filling amount of the filling cycle in order to reduce a retention time of the granular material inside the container to avoid a degradation of physical state of the granular material.

Thanks to the control system 200 and the weighting means 8 it is also possible to set and adjust very precisely and control with high reliability in all operating conditions of the transport system the amount of granular material inside the containers.

To be noted that both weighting means 8 and further sensors 9 comprise known and economic, but reliable, instruments or sensors.

The transport system of the invention, as above stated, comprises a control system 200 for controlling the plurality of granule containers 2 having a centralized or decentralized control architecture. Whatever architecture is implemented, the transport system comprises a wireless communication network 13 connecting the central control unit 6 and the local control units 5 of containers 2 for transmitting commands and coordinating container filling cycles, for exchanging information and data detected by the local control units 5.

The central control unit 6 and the local control units 5 - and the supervision management system 7 if provided - which comprise respective transmitter-receiver means, constitute the nodes of the wireless communication network 13. In particular, the central control unit 6 is the master node, while the local control units 5 are the slave nodes.

The wireless communication network 13 provides an interconnection topology of the nodes that can be configured dynamically. In particular, the nodes of wireless communication network 13 can be reconfigured "on the fly" so that different connection topologies may be implemented without acting on the communication hardware. In this way, it is possible to adapt the wireless interconnection of the transmitter-receivers of control units 5, 6 to the most favorable radio wave propagation. This can be achieved, for example, by using an ad-hoc network architecture wherein each node of the network 13 - namely each of local control units 5 and central control unit 6 - can communicate with every other node without an a priori definition of the interconnection topology between the nodes. Moreover, said ad-hoc network architecture may provide that all the nodes are interconnected directly or indirectly (namely through adjacent nodes) each other, the communication between two nodes being independent from the other communications.

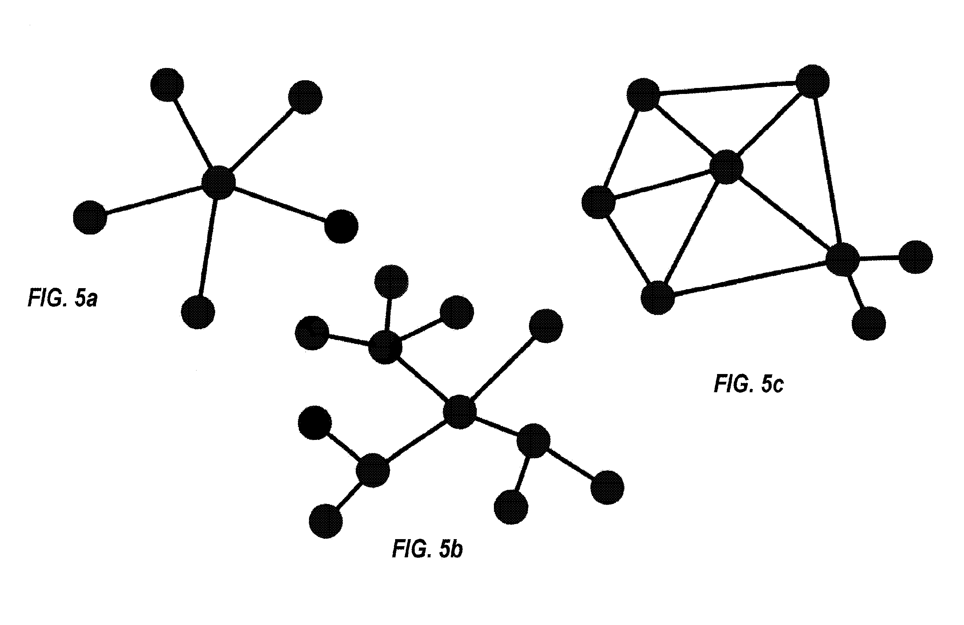

Figures 5a to 5c show some possible connection between nodes (Star network (Fig. 5a), Cluster tree network (Fig. 5b), Mesh network (Fig. 5c)) of wireless communication network 13.

The wireless communication network 13 uses a communication protocol that provides automatic configuration of the nodes so that no operator is required for setting a unique address for each local control unit 5 and for central control unit 6. In particular, each address can be assigned by the control central unit 6 or the local control units 5.

Local control units 5, central control unit 6 and supervision management system 7, comprise respective wireless communication interface means including hardware and related software that implements the communication protocol. The wireless communication interface means comprises the transmitter-receiver means.

Local control unit 5 further comprises control means for controlling the operation of respective container 2, in particular the filling cycle. Control means of local control unit 5 controls and monitors all the devices and equipments of container 2 (i.e. pumps, electro-valves, sensors, etc.).

In local control unit 5 the operation of control means is completely separate and independent from the operation of the wireless communication interface means, even if control means and wireless communication interface means can be integrated in a single hardware device.

The wireless communication interface means enables the local control unit 5 to exchange data, commands and information with any other node of the wireless communication network 13 - wherein the other node is a respective wireless communication interface means of another local control unit 5, central control unit 6, supervision management system 7 - without burdening the local control unit 5 with the control and management of the wireless communication network 13.

The wireless communication network 13 is implemented and managed by the hardware of wireless communication interface means, said hardware including for example a network processor that manages all the parameters and processes related to the reception and transmission of data and information, such as, for example, address allocation of the network node, routing of messages between different network nodes, verification whether the data received is correct and whether data have been received and transmitted in case of error, etc.

The transport system 100 of the invention by implementing the wireless communication network 13 allows reducing significantly the costs with respect to a known transport system for granular material that is based on a wired communication network and further provides several advantages that can be summarized as follows:
- shorter installation time of the system because there is no longer the need to physically lay network cables;
- lower system costs because there are no network cables;
- lower installation costs because the positioning of network cables imposes a significant limitation in the layout of machines and granule container systems feeding those machines; and
- elimination of incorrect configurations caused by typical connection errors of cabled networks, such as network cables incorrectly coupled to the connectors, a mistaken positioning of electrical conductors in the network cables, possible disconnections and accidental cut-offs of cables.

The communication protocol of wireless communication network 13 further provides a "self-healing" function that allows operation of the control system 200 even if one or more nodes, i.e. local control units 5, are not functioning due to temporary or permanent failures or due to maintenance of the containers 2, without requiring a manual intervention to define a new network configuration that excludes the missing nodes. In fact, a faulty node is not essential to forwarding data and information to downstream nodes because in the wireless communication network 13 it is possible for all the nodes that are active therein to communicate each other.

Even if a "master" node, namely the central control unit 6, fails, wireless communication network 13 can exclude the latter, which is substituted by a local control unit 5.

It is also possible to provide backup "sleeping" master nodes that may take on the role of master when the "original" master ceases operations following a fault.

This function can be better explained in the following example.

If the central control unit 6 has, for example, the task of receiving all the requests of containers 2 to be connected to the air pump, each container in order to be able to supply granular material. Since only one container 2 at a time can use the air pump, the central control unit 6 has the task of assigning the air pump.

If the central control unit 6 (master node) fails, the transport system 100 is not paralyzed, as usually happens in traditional transport systems having a wired communication network (e.g. a short circuit of the wired communication interface), because the local control units 5 (slave nodes) detect the loss of central control unit 6 and a preset local control unit 5 can take on the role of master node and assign the use of the air pump.

The wireless communication network 13 enables using portable, palm-sized, mobile or similar devices equipped with wireless network interfaces for supervising, programming and/or collecting data without requiring implementing procedures and connections typical of wired systems.

Since said devices become nodes of the wireless communication network 13 of the transport system 100, an operator can collect data from, and configure, all local control units 5 of respective containers 2 irrespective of his position with respect to said containers 2 which can be in the immediate vicinity but also in remote locations.

Thus even if the transport system 100 extends across large areas, the operator can easily know the status or modify the settings of a particular granule container 2, or conduct a diagnosis of the local control unit 5 coupled to container 2. The transport system 100 of the invention thanks to the implemented wireless communication network 13 allows solving the problem of electrostatic charges that affects the transport system for granular material made of plastics or other materials that may generate electrostatic charge.

In fact, by eliminating the galvanic connections (wired network) between the containers 2, the transport system is not equipotential and each container 2 may assume its own electrostatic potential (due to an electrostatic charge) that is independent of the electrostatic potential of other granule containers 2. In this way the destructive phenomena of electrostatic discharge, which can destroy the electric communication interfaces, are completely prevented.

## Claims

1. Transport system of granular material comprising a plurality of containers (2) and a control system (200) that includes:
- a plurality of local control units (5) associated to respective containers (2);
- a central control unit (6) exchanging information and issuing commands to said local control units (5), wherein such information comprise control information, operating information, including instructions which cause said local control units to answer by providing information in return and/or by starting one or more procedures at local level;
- a communication network (13) connecting said central control unit (6) and said local control units (5);
said transport system being **characterized in that** it comprises weighing means (8) that is associated to each container (2) for measuring a weight of granular material contained thereinto and is connected to the respective local control unit (5) and/or said central control unit (6) for sending information about said weight to said local control unit (5) and/or said central control unit (6), wherein said local control unit (5) and/or said central control unit (6) on the basis of said weight controls a quantity of said granular material inside said container (2) by starting a filling cycle for increasing said quantity by an amount determined by suitable control algorithms.

2. Transport system according to claim 1, wherein each local control unit (5) transmits information to said central control unit (6) about a fill/empty status detected by said weighing means (8) of the respective and/or other container (2) and causes said central control unit (6) to start or stop a filling cycle of the respective and/or of other container (2).

3. Transport system according to claim 1 or 2, wherein said control system (200) comprises timer means for measuring a duration of the filling cycle of each container (2) and determining and providing information, together with said weighing means (8), about inflow rate and/or outflow rate of said granular material for each container (2).

4. Transport system according to any preceding claim, wherein said control system (200) is configured for calculating an average duration time for completing the filling cycle of the respective container (2) and/or an average inflow rate and/or outflow rate of said granular material and/or an average consumption of said granular material between two or more filling cycles of the respective container (2).

5. Transport system according to any preceding claim, wherein said control system (200) is configured for stopping said filling cycle when the granular material inside the container (2) reaches an arbitrary weight, which can be set for each container (2) and can range up to a maximum accepted weight.

6. Transport system according to any preceding claim, wherein said local control unit (5) and/or said central control unit (6) can extend a duration time of said filling cycle of the respective container (2) by an extra time if said container (2) is not filled to a predetermined weight within a predetermined period of time, stopping said filling cycle when said predetermined weight is achieved or said extra time expires.

7. Transport system according to any preceding claim, wherein in case it is necessary to fill two or more containers (2) simultaneously, said control system (200) gives priority to the filling cycle of the container (2) having the statistically higher outflow rate.

8. Transport system according to any preceding claim, wherein said control system (200) calculates a duration of said filling cycle on the basis of a statistical processing of data regarding weights of granular material introduced in said containers (2) during previous filling cycles and durations of said previous filling cycles.

9. Transport system according to any preceding claim, wherein said control system (200) calculates a duration of said filling cycle on the basis of a predetermined filling amount, said filling cycle being interrupted as the weight of granular material inside the container (2) reaches said predetermined filling amount.

10. Transport system according to claim 9, wherein said predetermined filling amount is reduced by said control system (200) in order to reduce a retention time of said granular material inside the container (2) so as to avoid excessive cooling and/or absorption of humidity of said granular material.

11. Transport system according to any preceding claim, comprising sensors means (9) associated to each container (2) for measuring parameters, in particular temperature and humidity, in order to detect a possible degradation of physical state of said granular material inside said container (2), in particular an excessive cooling and/or a absorption of humidity.

12. Transport system according to any preceding claim, wherein said weighing means (8) comprises at least one weighting instrument mounted under the respective container (2) and connected to the local control unit (5) of said container (2).

13. Transport system according to any preceding claim, wherein said weighing means (8) is integrated with the local control unit (5) of container (2) and include at least one weighting sensor connected to said local control unit (5).

14. Transport system according to any preceding claim, wherein said communication network (13) is a wireless communication network.
